# EUROPÄISCHE PATENTSCHRIFT

(11) **EP 1 068 624 B1**
(45) Veröffentlichungstag und Bekanntmachung des Hinweises auf die Patenterteilung: **02.01.2002**
(21) Anmeldenummer: 99924754.7
(22) Anmeldetag: 26.03.1999
(51) Int. Cl.: H01H 31/00

(54) **KAPSELUNGSBAUSTEIN MIT EINEM IN EINE STROMBAHN INTEGRIERTEN DREI-STELLUNGS-SCHALTER FÜR EINE GASISOLIERTE SCHALTANLAGE**
ENCAPSULATING MODULE WITH A THREE-POSITION SWITCH INTEGRATED INTO A CURRENT PATH FOR A GAS-INSULATED SWITCHGEAR INSTALLATION
MODULE D'ENCAPSULAGE DOTE D'UN COMMUTATEUR A TROIS POSITIONS INTEGRE DANS UN CIRCUIT ELECTRIQUE ET DESTINE A UN EQUIPEMENT ELECTRIQUE ISOLE PAR UN GAZ

(30) Priorität: 03.04.1998 DE 19816361
(43) Veröffentlichungstag der Anmeldung: 17.01.2001
(73) Patentinhaber: SIEMENS AKTIENGESELLSCHAFT, 80333 München (DE)
(72) Erfinder: MEINHERZ, Manfred, D-13467 Berlin (DE); DAMBIETZ, Hans-Peter, D-13589 Berlin (DE)
(86) Internationale Anmeldenummer: DE9901004
(87) Internationale Veröffentlichungsnummer: WO9952119

(56) Entgegenhaltungen:
- EP-A- 0 824 264
- DE-A- 2 414 200
- DE-A- 3 743 544
- DE-U- 29 806 211
- FR-A- 1 441 239
- US-A- 3 876 846

## Beschreibung

Die Erfindung liegt auf dem Gebiet der Energieverteilung und ist bei der konstruktiven Ausgestaltung eines Kapselungsbausteines einer gasisolierten Schaltanlage anzuwenden, bei dem in eine Strombahn ein kombinierter Trenner/Erder-Schalter, ein sogenannter Drei-Stellungs-Schalter integriert ist und hierzu als Schaltelement ein in seiner Längsrichtung verschiebbares Kontaktteil vorgesehen ist, das mittels einer isoliert nach außen geführten Welle und eines Umlenkgetriebes angetrieben ist.

Bei einem bekannten Kapselungsbaustein dieser Art ist jede Phase der dreiphasigen Schaltanlage einzeln für sich gekapselt und der Drei-Stellungs-Schalter ist im Bereich einer 90°-Umlenkung einer Strombahn koaxial zur Achse des Kapselungsbausteines angeordnet. Das zylindrisch ausgebildete Kontaktteil ist in einem Gehäuse geführt, das Teil der Strombahn ist, und weist einen strombahnseitigen und einen kapselungsseitigen Kontaktbereich auf. Dem kapselungsseitigen Kontaktbereich ist am Kapselungsgehäuse ein Erdungskontakt zugeordnet, der als Kontaktbuchse ausgebildet ist. Parallel zum Kontaktteil ist eine isolierende Antriebswelle durch das Kapselungsgehäuse eingeführt, die über ein Umlenkgetriebe in Form einer Gewindestange und Gewindebuchse mit dem zylindrischen Kontaktteil gekoppelt ist (DE 24 14 200 A).

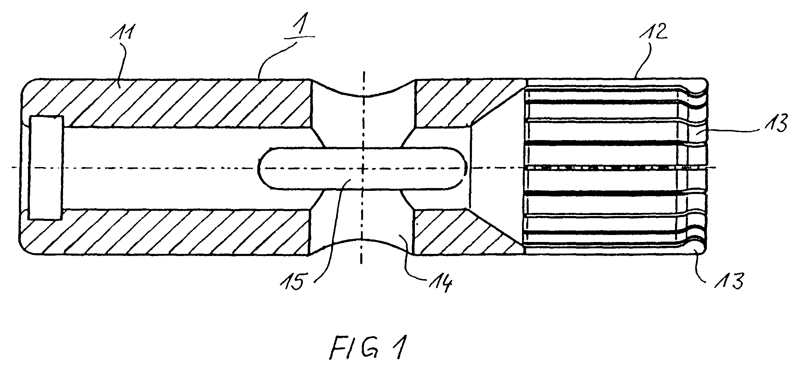

Für gekapselte Schaltanlagen mit gemeinsamer Kapselung für die drei Strombahnen sind zur Verringerung des Bauvolumens ebenfalls Drei-Stellungs-Schalter bekannt, wobei als von einer Schaltwelle gemeinsam angetriebene Schaltelemente schwenkbare Messerkontakte verwendet sind, die in ihren Endstellungen parallel oder unter einer Neigung von etwa 45° zur Kapselungsachse angeordnet sind. Der jeweils zugehörige Erdungskontakt kann dabei innerhalb des Kapselungsgehäuses befestigt sein (Zeitschrift "etz", Band 109, 1988, Heft 9, Seiten 404/405, Bild 5) oder auf einem Kontaktträger aufsitzen, dessen Halterung aus einem durch die Wand des Kapselungsgehäuses nach außen geführten und an einem bearbeiteten Teil der äußeren Oberfläche des Kapselungsgehäuses fixierten Bolzen besteht (Prospekt "Gekapselte SF₆-isolierte Hochspannungsanlage 72,5 bis 145 kV, Typ B 312" der Fa. Spreche Energie, 1988, Seite 2, Figur 1). - Bei einer weiterhin bekannten Schaltanlage mit gemeinsamer Kapselung der drei Strombahnen und einem an einem Abzweig angeordneten Drei-Stellungs-Schalter sind zur konstruktiven Vereinfachung der Schaltstrecke die schwenkbaren Messerkontakte durch die bekannten, verschiebbaren zylindrischen Kontaktteile ersetzt (DE 196 32 574 A1 & EP 0 824 264 A2).

Ausgehend von einem Kapselungsbaustein mit den Merkmalen des Oberbegriffes des Patentanspruches 1 (DE 196 32 574 A1) liegt der Erfindung die Aufgabe zugrunde, den Raumbedarf des Drei-Stellungs-Schalters weiter zu optimieren.

Zur Lösung dieser Aufgabe ist gemäß der Erfindung vorgesehen, daß der kapselungsseitige Kontaktbereich des zylindrischen Kontaktteiles aus einer Vielzahl von nach Art eines Zylindermantels angeordneten Kontaktfingern besteht und daß der zugehörige Erdungskontakt als selbstabschirmendes, pinartiges Kontaktstück ausgebildet ist.

Bei einer derartigen Ausgestaltung des Schaltelementes und des zugehörigen Erdungskontaktes fährt das Schaltelement mit dem kapselungsseitgen Kontaktbereich nicht in eine Kontaktbuchse ein, wie es bisher üblich ist, sondern ist selbst als Kontaktbuchse ausgebildet und fährt auf ein pinartiges Kontaktstück auf, das wesentlich kleiner ausgebildet sein kann als eine Kontaktbüchse. Der Vorteil der kleinen Bauweise kommt noch stärker zum Tragen, wenn die feststehenden Kontaktteile der Strombahn, mit denen das Schaltelement in Eingriff kommt, gemäß der älteren Patentanmeldung DE 198 50 430 A1 ausgebildet sind, d.h. wenn die Kontaktfinger zugleich die Abschirmfinger bilden.

Die kleine Bauweise des pinartigen Kontaktstückes ermöglicht auch eine Verkleinerung des Bauvolumens des Kapselungsbausteines im Bereich des die vertikal verlaufende Strombahn aufnehmenden Gehäusestutzens.

In Weiterbildung der Erfindung sitzt das pinartige Kontaktstück in an sich bekannter Weise auf einem Kontaktträger auf, dessen Halterung aus einem durch die Wand des Kapselungsgehäuses nach außen geführten und an einem bearbeiteten Teil der äußeren Oberfläche des Kapselungsgehäuses fixierten Bolzen besteht. Diese Ausgestaltung eröffnet die Möglichkeit, das pinartige Kontaktstück gegebenenfalls isoliert gegenüber dem Kapselungsgehäuse anzuordnen, wodurch der Erdungskontakt von außen zugänglich ist und für Meßzwecke benutzt werden kann. Die isolierte Anordnung erfolgt zweckmäßig mittels eines rohrförmigen, mit einem Befestigungsflansch versehenen Isolierteiles, durch das der Bolzen hindurchgeführt ist und das den Kontaktträger auf Abstand zum Kapselungsgehäuse hält.

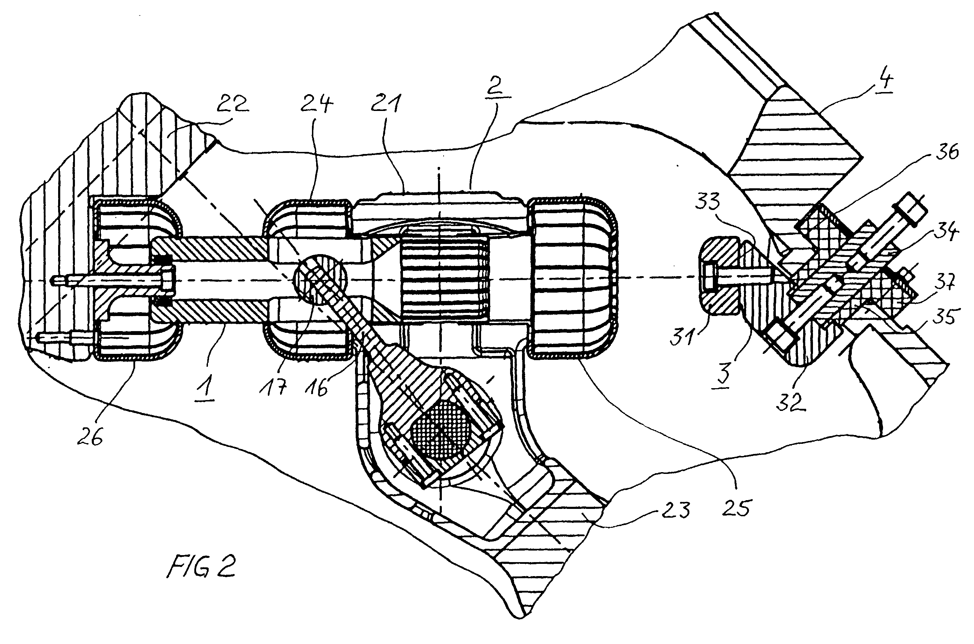

Ein Ausführungsbeispiel für die neuartige Gestaltung des Kapselungsbausteines ist in den Figuren 1 und 2 dargestellt. Dabei zeigt
- Figur 1: das gemäß der Erfindung ausgebildete Schaltelement im Längsschnitt und
- Figur 2: die Zuordnung dieses Schaltelementes zu den Kontaktstücken eines in einem Kapselungsgehäuse angeordneten Drei-Stellungs-Schalters.

Figur 1 zeigt das Schaltelement 1, bei dem es sich um ein längliches, zylindrisches Kontaktteil handelt, das - hinsichtlich seiner Funktion - einen strombahnseitigen Kontaktbereich 11 und einen kapselungsseitigen Kontaktbereich 12 aufweist. Während der strombahnseitige Kontaktbereich 11 von der äußeren Oberfläche des Schaltelementes gebildet wird, ist der kapselungsseitige Kontaktbereich innerhalb des Schaltelementes von den Kuppen einer größeren Anzahl von Kontaktfingern 13 gebildet, die nach Art eines Zylindermantels angeordnet und einstückig mit dem übrigen Körper des Kontaktteiles verbunden sind. - Das Schaltelement 1 ist weiterhin mittig mit einer Bohrung 14 zur Aufnahme einer Anlenkbuchse für einen in Figur 2 dargestellten zugehörigen Schalthebel und mit einem Schlitz 15 zum Durchgriff dieses Schalthebels versehen.

Gemäß Figur 2 ist das Schaltelement 11 in an sich bekannter Weise (DE 196 32 574 A1) Teil eines Drei-Stellungs-Schalters 2 und ist hierzu in einem gehäuseartigen Teil 21 einer Strombahn angeordnet. Diese Strombahn weist ein axial durch das-partiell angedeutete - Kapselungsgehäuse 4 geführtes Strombahnteil 22 und ein etwa vertikal dazu verlaufendes Strombahnteil 23 auf, welches mit dem gehäuseartigen Teil 21 verbunden ist. Das gehäuseartige Teil 21 ist an seinen Enden mit selbstabschirmenden Finger-Kontaktstücken 24 und 25 versehen; ein gleichartiges Kontaktstück 26 ist am Strombahnteil 22 angeordnet.

Am Kapselungsgehäuse 4 ist der Erdungskontakt 3 befestigt, der aus einem pinartigen Kontaktstück 31, einem Kontaktträger 32 und einem durch die Wandung des Kapselungsgehäuses 4 nach außen geführten Bolzen 34 besteht. Dieser Bolzen ist an einem bearbeiteten Teil 36 der äußeren Oberfläche des Kapselungsgehäuses 4 in nicht näher dargestellter Weise fixiert ist. Das Kontaktstück 31 sitzt dabei auf einer um etwa 45° gegenüber der Achse des Bolzens 34 geneigten Montagefläche 33 des Kontaktträgers 32 auf. Weiterhin ist im vorliegenden Fall der Bolzen 34 unter Verwendung eines mit einem Befestigungsflansch 37 versehenen Isolierteiles 35 isoliert gegenüber dem Kapselungsgehäuse 4 angeordnet. Das Isolierteil 35 hält dabei zugleich den Kontaktträger 32 auf Abstand zum Kapselungsgehäuse 4.

Das Schaltelement 1 ist mit Hilfe eines einarmigen Hebels 16 antreibbar, der mit seinem bewegbaren Ende über eine Anlenkbuchse 17 mit dem Schaltelement bewegbar verbunden und der auf einer Schaltwelle 18 angeordnet ist. Diese Schaltwelle ist vertikal zur Zeichenebene auf die Außenseite des Kapselungsgehäuses 4 geführt.

Bei Anordnung eines dreiphasigen Drei-Stellungs-Schalters in dem Kapselungsgehäuse 4 sind die Schaltbereiche der drei Phasen nebeneinander in dem Kapselungsgehäuse angeordnet, mit Blick auf Figur 2 vertikal zur Zeichenebene hintereinander.

## Patentansprüche

1. Kapselungsbaustein für eine gasisolierte Schaltanlage mit wenigstens einer in einer Kapselung angeordneten Strombahn, bei dem am Übergang von einem horizontal verlaufenden Teil der Strombahn auf ein dazu vertikal verlaufendes Teil der Strombahn ein kombinierter Trenner/Erder-Schalter, ein sogenannter Drei-Stellungs-Schalter angeordnet ist und bei dem das Schaltelement des Drei-Stellungs-Schalters als zylindrisches, in seiner Längsrichtung verschiebbares, in die Strombahn integriertes Kontaktteil (1) mit einem strombahnseitigen Kontaktbereich (11) und einem kapselungsseitigen Kontaktbereich (12) ausgebildet ist,
wobei dem Kontaktteil (1) am Kapselungsgehäuse (4) ein Erdungskontakt (3) zugeordnet ist,
**dadurch gekennzeichnet,**
**daß** der kapselungsseitige Kontaktbereich (12) des zylindrischen Kontaktteiles (1) aus einer Vielzahl von nach Art eines Zylindermantels angeordneten Kontaktfingern (13) besteht
und **daß** der zugehörige Erdungskontakt (3) als selbstabschirmendes, pinartiges Kontaktstück (31) ausgebildet ist.

2. Kapselungsbaustein nach Anspruch 1,
**dadurch gekennzeichnet,**
**daß** das pinartige Kontaktstück (31) isoliert gegenüber dem Kapselungsgehäuses (4) angeordnet ist und hierzu auf einem Kontaktträger (32) aufsitzt, dessen Halterung aus einem durch die Wand des Kapselungsgehäuses (4) nach außen geführten, von einem rohrförmigen Isolierteil (35) umgebenen und an einem bearbeiteten Teil der äußeren Oberfläche des Kapselungsgehäuses fixierten Bolzen (34) besteht.

## Claims

1. Encapsulation module for a gas-insulated switchgear assembly having at least one current path which is arranged in encapsulation, in which a combined disconnector/grounding switch, which is referred to as a three-position switch, is arranged at the transition from a horizontally running part of the current path to a part of the current path which runs vertically with respect to this, and in which the switching element of the three-position switch is in the form of a cylindrical contact part (1) which can be moved in its longitudinal direction, is integrated in the current path and has a contact region (11) on the current path side and a contact region (12) on the encapsulation side,
with the contact part (1) having an associated earthing contact (3) on the encapsulation enclosure (4),
**characterized**
**in that** the contact region (12) on the encapsulation side of the cylindrical contact part (1) comprises a large number of contact fingers (13) which are arranged in the form of a cylindrical casing,
and **in that** the associated earthing contact (3) is in the form of a self-screening, pin-like contact piece (31).

2. Encapsulation module according to Claim 1,
**characterized**
**in that** the pin-like contact piece (31) is arranged such that it is isolated from the encapsulation enclosure (4) and to this end is seated on a contact support (32) whose holder comprises a bolt (34) which is guided outwards through the wall of the encapsulation enclosure (4), is surrounded by a tubular insulating part (35), and is fixed on a machined part of the outer surface of the encapsulation enclosure.

## Revendications

1. Module de blindage pour une installation de commutation isolée par du gaz comportant au moins une voie de courant disposée dans un blindage, dans lequel un commutateur combiné de sectionnement et de mise à la terre, appelé commutateur à trois positions, est disposé à la transition entre une partie de la voie de courant s'étendant horizontalement et une partie de la voie de courant s'étendant à la verticale de la précédente, et dans lequel l'élément de commutation du commutateur à trois positions est réalisé sous forme de pièce (1) de contact cylindrique, mobile en translation dans sa direction longitudinale et intégrée dans la voie de courant, pièce qui est dotée d'une région (11) de contact côté voie de courant et d'une région (12) de contact côté blindage, un contact (3) de mise à la terre étant associé à la pièce (1) de contact sur le boîtier (4) de blindage,
**caractérisé en ce que** la région (12) de contact côté blindage de la pièce (1) de contact cylindrique est constituée d'une multiplicité de doigts (13) de contact disposés à la manière d'une surface latérale de cylindre, et **en ce que** le contact (3) associé de mise à la terre est réalisé sous forme d'élément (31) de contact auto-protecteur du genre broche.

2. Module de blindage suivant la revendication 1, **caractérisé en ce que** l'élément (31) de contact du genre broche est disposé en étant isolé par rapport au boîtier (4) de blindage et repose à cet effet sur un porte-contact (32), dont la fixation consiste en un boulon (34), dirigé vers l'extérieur à travers la paroi du boîtier (4) de blindage, entouré d'une pièce (35) isolante tubulaire et fixé sur une partie usinée de la surface extérieure du boîtier de blindage.
